# EUROPEAN PATENT APPLICATION

(11) **EP 2 509 024 A1**
(43) Date of publication of application: **10.10.2012**
(21) Application number: 11762662.2
(22) Date of filing: 24.03.2011
(51) Int. Cl.: G06F 21/20

(54) **FORENSIC SYSTEM, METHOD AND PROGRAM**

(30) Priority: 29.03.2010 JP 2010075960
(71) Applicant: Ubic, Inc., Minato-ku, Tokyo 108-0075 (JP)
(72) Inventor: MORIMOTO, Masahiro, Tokyo 108-0075 (JP); SHIRAI, Yoshikatsu, Tokyo 108-0075 (JP); TAKEDA, Hideki, Tokyo 108-0075 (JP)
(74) Representative: Metzler, Volker
(86) International application number: PCT/JP2011/057141
(87) International publication number: WO 2011/122431

(57) **Abstract**

The present invention can extract only digital document information related with a specific individual to achieve reduction of working load for evidential material preparation for litigation.

A specific individual is selected from at least one individual included in user information, only digital document information which was accessed by the specific individual is extracted based upon access history information regarding the selected specific individual, additional information indicating whether or not document files in the extracted digital document information are each related with litigation is set, and a document file related with litigation is outputted based upon the additional information.

## Description

### BACKGROUND OF INVENTION

### 1. Technical Field

The present invention relates to a forensic system, a forensic method, and a forensic program, and in particular to a forensic system, a forensic method, and a forensic program for collecting digital document information as related with litigation.

### 2. Background art

Conventionally, when a crime or a legal conflict relating to a computer such as unauthorized access or leakage of confidential information called "forensic" occurs, a means or a technique for collecting and analyzing devices, data, or electric records required for investigation into the cause or the investigation to clarify legal evidentiality thereof has been proposed.

Particularly, in a civil litigation in United State of America, since such a procedure as eDiscovery is required both a plaintiff and a defendant of litigation to submit all of related digital information as evidences. They also need to submit digital information recorded in computers or servers as evidences as well.

On the other hand, according to rapid development and spreading of IT, most information is produced by computers in a today's business world, so that much digital information floods even within the same company.

Therefore, in the preparation work of evidential material for submission to a law court, such a mistake that even confidential digital information which is not necessarily related with litigation is submitted occurs easily and it considers as a problem.

In recent years, techniques about a forensic system have been proposed in JP-A-2006-178521 and JP-A-2007-148731. JP-A-2006-178521 discloses a forensic system where identification of a wrongdoer can be performed efficiently by a method which allows testimony to evidentiality conservation whereby reliability of the identification is robust against human factors.

JP-A-2007-148731 discloses a forensic system where a forensic performs an ex-post handling such as identification of a criminal and a legal action is a content of loss compensation in an information damage insurance system which pays an insurance coverage to damage due to leakage of personal information.

### Summary of Invention

However, the conventional forensic systems of JP-A-2006-178521 and JP-A-2007-148731 disclose that in collection of digital document information related with a specific individual, they may specify accessible digital document information by the individual to collect all the information, but due to the broader access right, vast amounts of information is eventually collected.

Further, when all the information set with an access right to the individual is collected, if the individual's position is higher within an organization, the access right tends to be set broader, so that an enormous amount of electric documents which are not related with litigation and which were not actually browsed by individual are eventually collected.

As a result it brings an issue that too much work and cost were required for analyzing and evaluating documents to find only related documents with the individual from huge amounts of collected information.

The present invention provides a forensic system, a forensic method and a forensic program for analyzing digital information which was accessed by an individual related with litigation without analyzing all of the digital information to which the individual have an access right.

In an aspect of the present invention, there is provided a forensic system which acquires digital information recorded on a plurality of computers or a server to analyze the acquired digital information, comprising: a digital information acquiring unit which acquires digital information containing digital document information composed of a plurality of document files, user information about users utilizing the plurality of computers or the server, and access history information which shows the fact that the users accessed a document file recorded in the server; a recording unit which records therein digital information acquired by the digital information acquiring unit; a display unit which displays the recorded digital information; a specific-individual selecting unit which selects a specific individual from at least one user contained in the user information via the display unit; a digital document information extracting unit which extracts only digital document information accessed by the specific individual based upon the access history information related with the selected specific individual; an additional information setting unit which sets, via the display unit, additional information showing whether or not document files in the extracted digital document information are each related with litigation; and an output unit which outputs a document file related with litigation based upon the additional information.

The term "access history information" means information showing that a user which utilized either among a plurality of computers accessed the digital document information recorded in the server. For example, access history information includes a user ID indicating who the user is, and access information indicating when and which digital document information the user has been accessed.

The term "digital information acquiring unit" means a unit that may acquire digital information recorded in a plurality of computers or servers. For example, a method for acquiring the digital information may include such a method as a method for copying digital information recorded in the computers or the server in an electronic medium to copy the digital information in a forensic system via the electronic medium or a method of connecting the computers or the server and the forensic system to each other via a network line to copy digital information recorded in the computers or the server in the forensic system, thereby performing preservation of digital information. Moreover, the digital information acquiring unit may include a unit to acquire second digital information including second digital document information, second user information, and second access history information, the second digital information being recorded in a second server which is different from the above-described server, and the forensic system of the present invention may be a system which can use not only the above-described digital information but also the second digital information to extract the second digital document information based upon the second access history information.

In one aspect of the present invention, the forensic system may further comprise a text information extracting unit which extracts text information for each of document files from the recorded digital document information; a keyword selecting unit which selects a keyword; and a searching unit which searches a document file including the selected keyword based upon the extracted text information, wherein the additional information setting unit sets additional information to the searched document file.

In one aspect of the present invention, the forensic system may further comprise a data converting unit that converts recorded document files in the digital document information in the recording unit into a predetermined data format, wherein the document files converted by the data converting unit are processed with the same data format as the converted data format in a period before it is outputted by the output unit.

In another aspect of the present invention, the forensic system may further comprise a statistical data producing unit which produces statistical data represented from data size for each data format of the acquired digital document information or statistical data represented from data size for each data format of the searched digital document information.

Further, the forensic system of the present invention can comprise a clock unit which, when digital information is anew acquired, clocks a time and date of the acquiring, the digital information further including folder information saving the digital document information, wherein the digital information acquiring unit acquires digital document information and folder information which were produced after a time and date clocked by the clock unit previously and acquires user information and access history information related with the acquired digital document information and folder information.

The term "server" may mean one or more servers, or a combination of a plurality of servers. Further, for example, the server may include at least two of a mail server, a file server, and a document managing server.

The configuration can be adopted that the forensic system of the present invention may include a plurality of servers for a forensic system, where the digital information extracting unit and the searching unit are separated to the servers for a forensic system, respectively, and the separated servers for a forensic system are further connected to each other via a network.

The forensic system of the present invention can be provided with a plurality of additional information setting units where additional information can be set by different operators.

The term "display unit" may mean a display device to display digital information. Further, the term "displays the recorded digital information" may mean displaying all of the user information, the digital document information, and the access history information, displaying at least one of these information, or displaying at least one of attribute information (for example, names of users, names of document files, individuals which conducted access, access time, document files) of these information.

The term "output unit" may mean a unit to output digital document information to a production. For example, it may be a printer or a device to produce digital document file.

In another aspect of the present invention, there is provided a forensic method for acquiring digital information recorded on a plurality of computers or a server to analyze the acquired digital information, comprising: a step of acquiring digital information containing digital document information composed of a plurality of document files, user information about users utilizing the plurality of computers or the server, and access history information which shows the fact that the users accessed a document file recorded in the server; a step of recording the acquired digital information; a step of displaying the recorded digital information; a step of selecting a specific individual from users contained in the user information; a step of extracting only digital document information which was accessed by the specific individual based upon access history information related with the selected specific individual; a step of setting additional information indicating whether or not document files in the extracted digital document information are each related with litigation; and a step of outputting a document file related with litigation based upon the additional information.

In one aspect of the present invention, there is provided a forensic program for acquiring digital information recorded on a plurality of computers or a server to analyze the acquired digital information, for causing a computer to execute: a function of acquiring digital information containing digital document information composed of a plurality of document files, user information about users utilizing the plurality of computers or the server, and access history information which shows the fact that the users accessed a document file recorded in the server; a function of recording the acquired digital information; a function of displaying the recorded digital information; a function of selecting a specific individual from users contained in the user information; a function of extracting only digital document information which was accessed by the specific individual based upon access history information related with the selected specific individual; a function of setting additional information indicating whether or not document files in the extracted digital document information are each related with litigation; and a function of outputting a document file related with litigation based upon the additional information.

The above-described summary of the present invention does not include all of features required for the present invention. Further, sub-combinations of these features may constitute the present invention.

According to the forensic system, the forensic method, and the forensic program of the present invention, by selecting a specific individual, extracting only digital document information which was accessed by the specific individual based upon access history information about the selected specific individual, setting additional information indicating whether or not document files in the extracted digital document information are each related with litigation, and outputting a document file related with litigation based upon the additional information, the operators can extract only the digital document information which was accessed by the specific individual and analyze and evaluate the same without evaluating all of digital document information within an range of an accessible right possessed by the specific individual who is related with litigation.

The present system may extract only the digital document information related with the specific individual among the flood of digital document information to achieve reduction of working load for evidential material preparation for litigation.

According to the present forensic system, the forensic method, and the forensic program of the present invention, the second digital information recorded in the second server can be used, so that when the second digital document information is extracted based upon the second access history information, the operators can extract only digital document information which was accessed by the specific individual from digital document information recorded in the second server and analyze and evaluate the same without evaluating all of much digital information recorded in a plurality of servers.

According to the present forensic system, the forensic method, and the forensic program of the present invention, the text information extracting unit, the keyword selecting unit, and the searching unit are further provided, where, when the additional information setting unit sets additional information to the searched document file, the operators can narrow down only one of the digital document information recorded in the server which was accessed by the specific individual, and a population of digital document information which is potentially related with litigation by a predetermined search.

According to the present forensic system, the forensic method, and the forensic program of the present invention, when a document file converted by the data converting unit is processed with the same data format as the converted data format in a period before it is outputted by the output unit, the operator can reduce a wasteful step such as data format conversion in the course of a processing flow and they can exclude a risk of quality degradation of the digital document information.

According to the forensic system, the forensic method, and the forensic program of the present invention, further, when the statistical data producing unit is provided, since statistical data can be visualized and provided to operators, the operators can grasp labor required for litigation preparation in an early stage.

According to the forensic system, the forensic method, and the forensic program of the present invention, further, when the digital information acquiring unit acquires digital document information and folder information which were produced after a time and date clocked by the clock unit previously, and it acquires user information and access history information related with the acquired digital document information and folder information, the operators can perform difference collection of digital information, which can reduce load for acquiring the same digital information from the server or the like redundantly each time.

According to the forensic system, the forensic method, and the forensic program of the present invention, when the digital information extracting unit and the searching unit are separated into servers for a forensic system, respectively, the processing capacity of the whole system can be improved by distributing calculation steps of respective processing units to the respective servers.

The forensic system, the forensic method, and the forensic program may further include a plurality of additional information setting units. The additional information setting units may set additional information by different operators so, a plurality of individuals enable to evaluate digital document information as a preparation work for submitting evidential material to the law court in early stage.

### Brief Description of the Drawings

FIG. 1 is a block diagram showing a forensic system in a first embodiment of the present invention;
FIG. 2 is a diagram showing a flow of a forensic system service of the present invention;
FIG. 3 is a flow chart showing a present forensic process of the forensic system of the present invention; and
FIG. 4 is a block diagram showing a forensic system in a second embodiment of the present invention.

### Description of the Preferred Embodiments

Embodiments of the present invention will be described below with reference to the drawings.

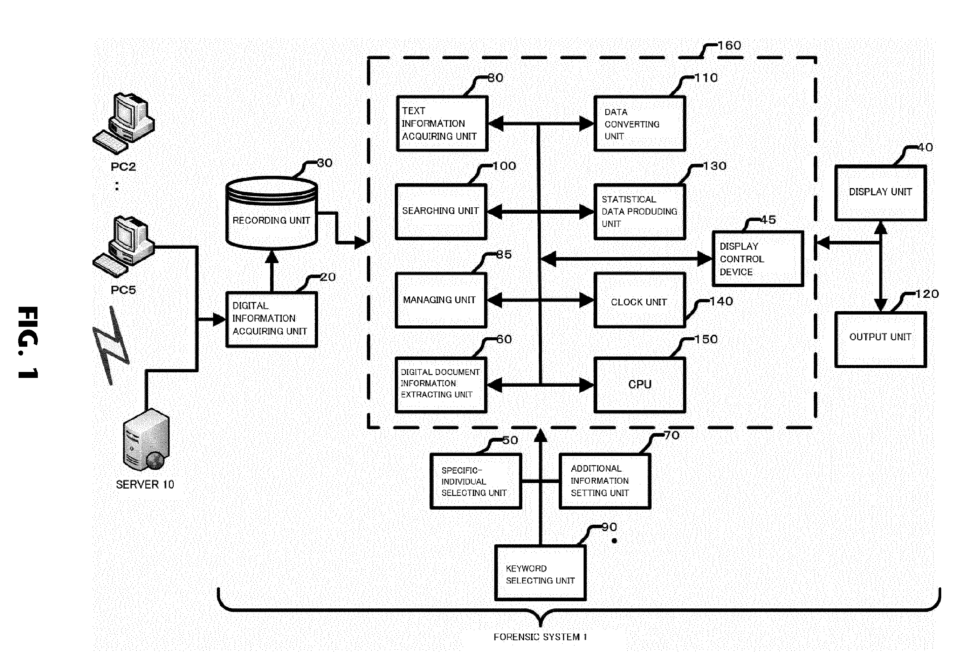

FIG. 1 is a block diagram showing a forensic system 1 in an embodiment of the present invention.

Forensic system 1 shown in FIG. 1 acquires digital information recorded in a plurality of computers (PC2 to PC5) and server 10 to analyze the acquired digital information. The forensic system is provided with digital information acquiring unit 20 which acquires digital information including digital document information composed of a plurality of document files, user information about users utilizing the plurality of computers (PC2 to PC5) or server 10, and access history information showing the fact that the users accessed document files recorded in server 10; recording unit 30 records digital information acquired by the digital information acquiring unit 20; display unit 40 which displays the recorded digital information; specific-individual selecting unit 50 which selects a specific individual from users contained in the user information via display unit 40; digital document information extracting unit 60 which extracts only digital document information which was accessed by the specific individual based upon access history information related with the selected specific individual; an additional information setting unit 70 which sets, via display unit 40, additional information showing whether or not document files in the digital document information extracted are each related with litigation; and output unit 120 which outputs a document file related wit litigation based upon the additional information.

Control unit 160 includes display control unit 45, digital document information extracting unit 60, text information acquiring unit 80, managing unit 85, searching unit 100, data converting unit 110, statistical data producing unit 130, clock unit 140, and CPU 150.

Further, forensic system 1 may include a keyboard, a mouse or a data input device such as a touch panel, if display unit 40 has a touch panel function. The data input devices may include specific-individual selecting unit 50, additional information setting unit 70, and keyword selecting unit 90.

Specific individual-selecting unit 50, additional information setting unit 70, and keyword selecting unit 90 may be separated data input devices or a sole data input device.

Further, output unit 120 may be a recording device for recording data in an electronic medium or a printer.

Forensic system 1 shown in FIG. 1 may execute a forensic program stored in an external storage device (not shown) on CPU 150 of the computer. The forensic program may be stored in a recording medium such as CD-ROM, or distributed via network such as Internet, and may be installed in a computer.

In the first embodiment described below of the present invention, forensic system 1 is a personal computer. Forensic system 1 may be a server or a portable data assistance type of computer device. Forensic system 1 may be a system configuration of a network type described in the second embodiment.

Digital information acquiring unit 20 acquires digital information recorded in computers PC2 to PC5 or server 10 used by users.

For example, digital information acquiring unit 20 copies digital information recorded in computers PC2 to PC5 or server 10 to an electronic medium such as USB, CD, DVD. Unit 20 may further copy the digital information to forensic system 1 via the electronic medium.

Digital information acquiring unit 20 may preserve to collect recorded digital information in computers PC2 to PC5 or serer 10 via network in the case that forensic system 1 and computers PC2 to PC5 or server 10 connect to the network.

Digital information acquiring unit 20 may collect recorded second digital information including second digital document information, second user information and second access history information in a second server different from server 10.

In this case, forensic system 1 may extract second digital information and the digital information from server 10. Forensic system 1 may extract second digital document information utilizing second access history information recorded in second server.

Forensic system 1 may further include text information extracting unit 80 to extract text information from each of a plurality of document files, keyword selecting unit 90 which selects a keyword, and searching unit 100 which searches a document file including the selected keyword based from the extracted text information from the recorded digital document information.

Additional information setting unit 70 sets additional information to the document file searched by searching unit 100.

Forensic system 1 may further include data converting unit 110. The unit 110 converts and normalizes digital documents of digital document information recorded by unit 30 to common format. The document file which has been converted by data converting unit 110 is processed without further converting until from output unit 120.

Forensic system 1 may further include statistical data producing unit 130. Unit 130 produces statistical data represented from data size for each data format of the acquired digital document information, or statistical data represented from data size for each data format of the digital document information searched by searching unit 100.

Forensic system 1 may include clock unit 140 to determine time and date when digital information is acquired. The digital information may include folder information to specify where the digital document information is stored. Digital information acquiring unit 20 acquires only digital document information and folder information which were produced after a time and date clocked by clock unit 140 previously. Unit 20 acquires only user information and access history information related with the acquired digital document information and folder information.

The digital information may include the digital document information, the user information, the access history information, and the folder information.

Clock unit 140 calculates a time and date of the digital information has been acquired by digital information acquiring unit 20.

Display unit 40 displays content according to an instruction of display control unit 45 included in control unit 160.

Digital information acquiring unit 20 may selectively acquire from computers PC2 to PC5 or server 10 of digital document information and folder information produced in a period from the (n-1)^{th} to n^{th} (n-2, 3..) acquiring point. At this time, digital information acquiring unit 20 may further acquire user information and access history information related with the acquired digital document information and folder information. Server 10 may be at least one server. For example, it may be composed of a plurality of servers. Moreover, it may be at least two or more of a mail server, a file server, and document management server.

Forensic system 1 may be used simultaneously by operators.

Additional information setting unit 70 may include a plurality of data input devices, and a plurality of display units 40 corresponding to the plurality of additional information setting units 70.

A plurality of operators may set additional information through the plurality of additional information setting units 70 while evaluating digital document information simultaneously.

Output unit 120 is to a unit to output digital document information. For example, output unit 120 may be a printer or a recording device which records digital information on an electronic medium.

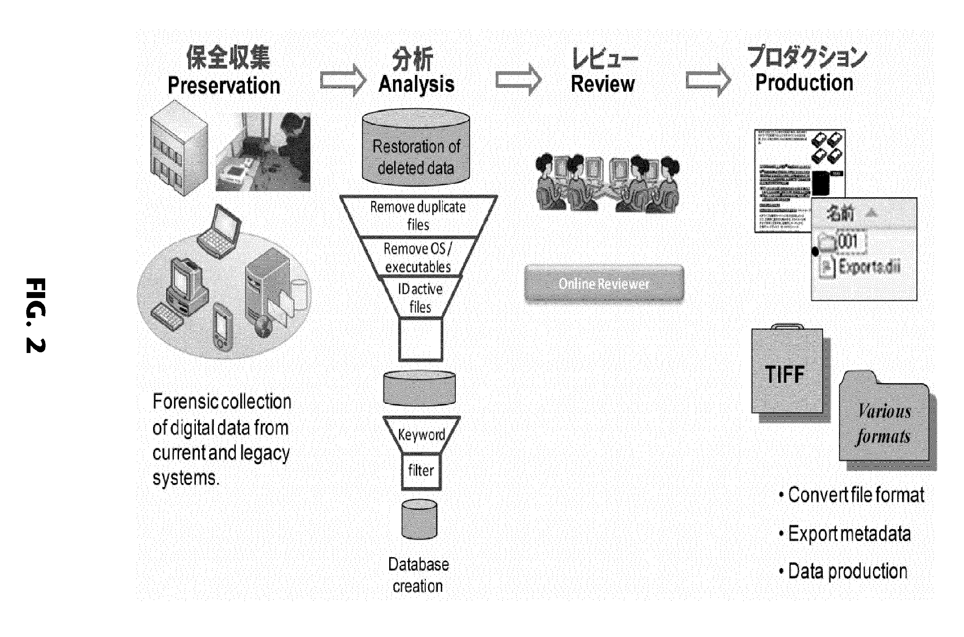

Fig. 2 illustrates a service flow to explain a procedure for performing a preparation work for submission of evidential materials to the law court in forensic system 1.

When a crime or a legal conflict regarding a computer such as unauthorized access or leakage of confidential information which is called "forensic" occurs, it is necessary to collect and analyze devices, data, and/or electronic records which are required for investigation of the causes or investigation to clarify legal evidentiality thereof.

Particularly, in a civil litigation in United State of America, since such a procedure as eDiscovery is required, both a plaintiff and a defendant of litigation must submit all of related digital information as evidences. They must submit digital information recorded in a computer(s) or a server(s) as evidences.

Forensic system 1 performs to preserve the digital information recorded in computers PC2 to PC5 and server 10 in order to evaluate digital information related with litigation thereby conducting a preparation work to submit evidential materials to the law court.

Thereafter, forensic system 1 registers the preserved digital information in a database such as recording unit 30 and analyzes the digital information to classify the same based on the keyword searching or filtering.

Recording unit 30 may be included in one of computers in forensic system 1, or may be stored in the server different from the computer.

Forensic system 1 provides the classified digital information on display unit 40 and operators may review the data and set additional information to the digital document information via additional information setting unit 70.

Control unit 160 has functions for preservation and analysis, a processing analysis and search function, operators' reviewing, and producing.

For example, preservation and analysis function of control unit 160 may have a case management function (a function of managing unit 85) which allows data management for each case, a file analysis function (a function of searching function 100) which allows analysis of the kind of file and/or a possession amount thereof for each target individual/evidential material and allows analysis of a file to be searched, a file kind selection and extraction function (a function of digital document information extracting unit 60) which allows selection of file type to be searched/browsed, and a preservation function (a function of data converting unit 110) which allows preservation of the selected file as a separate file. Further, the processing analysis and search function of control unit 160 may have a full-text search function and a frequently-appearing word and phase top-extraction function (functions of searching unit 100). The full-text search function is compatible with multi-language, allows AND, OR, and NOT searches by Boolean operation, a grouping search, and has a highlight display function of a searched word or phrase, a conversion function to Meta Data. Further, the full-text search function may have an advanced search function such as neighborhood search. The frequently-appearing word and phase top-extraction function is for extracting a frequently-appearing word or phrase within certain digital document information.

Review function of control unit 160 has, for example, an E-mail Family browsing processing function (a function of searching unit 100) which allows collective browsing of E-mail Family, a free-design Tag function (a function of searching unit 100) which allows search for a material provided with one evaluation or a plurality of evaluations as additional information based upon the evaluation(s), a free-design BookMark function (a function of searching unit 100) which allows BookMark search for a material set with hierarchy structure BookMark, a free-input comment column (a function of the managing unit 85) provided with a comment column in which any number of characters can be inputted, a simultaneous browsing function for the above-described plurality of operators to evaluate digital document information, an access right control function (a function of managing unit 85) which allows setting of access right, manager right, browsing-only right, or the like for each case, for each account of a browser when performing Review, a writing-within-document Memo function (a function of managing unit 85) which allows writing within a document without changing a text of digital document information, a case Management function (a function of managing unit 85) which allows display of the number of Review-completed documents (%), an E-mail Threading function (a function of managing unit 85) which displays E-mail threads (returning, forwarding, and the like) collectively, a mail analysis display function (a function of statistical data producing unit 130) which displays transmissions and receptions of mails graphically, a similar document display function (a function of managing unit 85) which performs automatic classification of similar documents such as Draft or old Version to display them, a similar document difference highlight function (a function of managing unit 85) which highlight-displays only a portion of a difference between similar documents, and a previous and next texts-search Hit portion display function (a function of searching unit 100) which displays only the surrounding area of a word or a phase hit by searching.

The Production function of control unit 160 has various output functions (a function where output can be performed by output unit 120 according to an instruction from managing unit 85) of XML output of such information as actual file, meta information or Tag information, CSV output, various load file outputs, and a Batch Printing function (a function where output can be performed by output unit 120 according to an instruction from managing unit 85) which prints the selected plurality of digital document information.

Forensic system 1 performs Production to produce acquired data in an electronic medium by output unit 120. For example, forensic system 1 records data in an electronic medium with a common data format by a recording device.

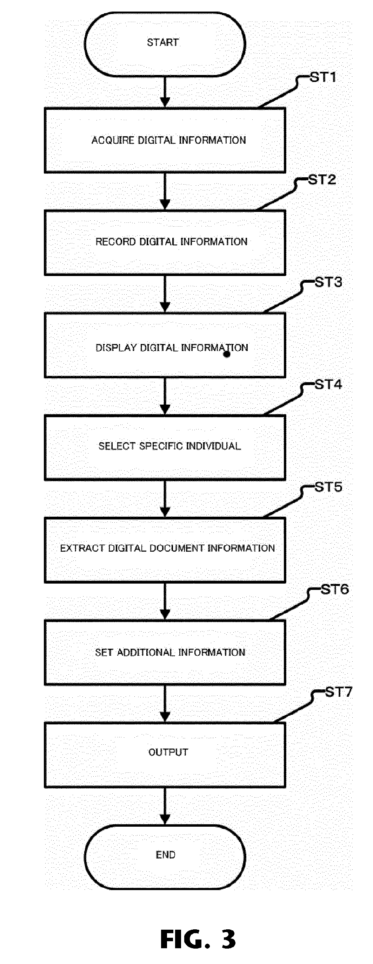

A procedure for performing a preparation work for submitting evidential materials to the law court by forensic system 1 will be described in detail with reference to a flowchart shown in FIG. 3.

Digital information acquiring unit 20 acquires digital information including digital document information in common format such as Word format, PDF format, PPT format, or Excel format, user information about users who used computers PC2 to PC5 or server 10, and access history information indicating the user and above-mentioned digital document information recorded in the server (ST1).

As shown in FIG. 1, the access history information indicates a fact that the user who used computers PC2 to PC5 accessed the digital document information recorded in server 10 via network. For example, access history information is access information indicating a user ID indicating who a user is, which digital document information the user accessed, and when the user accessed the digital document information.

Explanation is made assuming that the number of computers PC2 to PC5 which users utilized is, for example, four, but the number of PCs is not limited to four, and it may be any plural number.

Digital information acquiring unit 20 records the acquired digital information to recording unit 30 (ST2). Display unit 40 can display the digital information (at least either of the digital document information, the access history information, the user information, information showing only title of the digital information) via control unit 160 (ST3).

For example, according to an instruction from display control unit 45, display unit 40 may display all of the user information, the digital document information, and the access history information, it may display at least one thereof, or it may display at least one of attribute information (for example, a name of a user, a file name of a document file, an individual who conducted access, an access time, a document file) of these information.

For example, while confirming a screen of display unit 40, operators conducts login to forensic system 1 and further produces Case (a unit of the uppermost data group in the database in forensic system 1). Further, while confirming screen of display unit 40, the operators perform setting of connection destination of a server corresponding to recording unit 30 in which the digital information has been recorded and management thereof (in this case, a plurality of recording units 30 are present). Further, while confirming the screen of display unit 40, the operators performs setting of Custodian (a data-holding target individual) and management thereof. While confirming screen of display unit 40, the operators performs production of Target (a middle data group unit in the database in forensic system 1) composed of digital document information information-collected and preserved, and status control thereof. Next, while confirming screen of display unit 40, the operators make the connection of Custodian to Target information-collected and preserved.

For example, while confirming screen of display unit 40, the operators may preset which custodian was related with litigation to a plurality of Targets composed of the digital document information acquired from computers PC2 to PC5 or server.

While confirming screen of display unit 40, the operators select one or a plurality of Targets to be analyzed.

Thus, the control unit 160 can acquire the digital information recoded in recording unit 30 to analyze the digital information by the various function units.

Forensic system 1 is provided with statistical data producing unit 130 which produces statistical data represented from data size for each data format of the digital document information recorded in recording unit 30, or statistical data represented from data size for each data format of the digital document information searched by searching unit 100.

For example, while confirming screen of display unit 40, the operators can select Custodian to be analyzed and a predetermined Path (directory) from Target corresponding to the Custodian to display a list of an analysis result of the number of files and a size for each Custodian. Further, while confirming screen of display unit 40, the operators can display the list of the analysis result of the number of files and a size for each Path (directory) as a chart. Further, while confirming screen of display unit 40, the operators can display the analysis result of the number of files and a size for each Path (directory) as a list. Further, while confirming screen of display unit 40, the operators can display the list of the analysis result of the number of files and a size for each File Type as a chart. Further, while confirming screen of display unit 40, the operators can display the list of the analysis result of the number of files and a size for each File Type.

Moreover, while confirming screen of display unit 40, the operators can display the list of the analysis result of the number of files and a size for each File Type as a chart. Further, while confirming screen of display unit 40, the operators can display the list of the analysis result of the number of files and a size for each File Type of only a text-searchable file as a chart. The text-searchable file is a file where text information can be preliminarily extracted from the digital document information recorded in recording unit 30 by text information acquiring unit 80.

Next, the operators select a specific individual (Custodian) from users contained in the user information in the digital information recorded in recording unit 30 by specific-individual selecting unit 50 (ST4).

While confirming screen of display unit 40, the operators select Case, Custodian, and Target.

When the operators review (evaluate) the digital document information where an access right has been set to Custodian, if the individual's rank is higher within an organization, the access right frequently tends to be set broader, so that numerous electric documents which are not related with litigation and which were not actually browsed by the individual are collected eventually. Therefore, such a problem occurs that much labor and cost are required to perform analysis in order to find only documents related with the individual from an enormous amount of collected information.

Accordingly, digital document information extracting unit 60 can also extract only the digital document information which was accessed by the selected specific individual (Custodian) based upon the access history information related with the selected specific individual (ST5).

For example, when the operators select Mr. Koh (personal name) who is Custodian, only the document file which was accessed by Mr. Koh is extracted within the digital document information within the selected Target. By using the access history information, the operators can extract the document file (for example, browsed, edited, or produced) which was actually accessed by Mr. Koh. The access history information shows a fact that a user which utilized either of a plurality of computers accessed the digital document information recorded in the server. For example, the access history information includes a user ID showing who the user is and access information showing which digital document information the user accessed and when the user accessed the digital document information. Since the ID information at Mr. Koh's utilization time of the computer or the server and the access history information about Mr. Koh are preliminarily recorded in recording unit 30, the operators can extract the digital document file which was accessed by Mr. Koh by taking a correspondence relationship between Mr. Koh's ID and the document file which was accessed by Mr. Koh.

The example of Mr. Koh has been described, but when a plurality of Custodians such as Mr. Otsu (personal name) in addition to Mr. Koh are selected, digital document information extracting unit 60 can extract a document file related with the plurality of Custodians.

As described above, when the operators has set a relationship between Target and Custodian, only a document file which was accessed by Custodian who was actually selected by specific-individual selecting unit 50 within Target which was determined to be related and selected as Custodian at Target unit is extracted consistently.

Moreover, the operators can perform search according to the function of searching unit 100, while confirming screen of display unit 40. Further, the operators can perform simple browsing according to the function of display control unit 45, while confirming screen of display unit 40. The operators can grasp the content of the digital document information by the simple browsing.

The operators set additional information to the extracted document files in the digital document information to indicate whether or not each of the document files are related with litigation (ST6).

Specifically, the operators may add a tag for each document file depending on its relationship with litigation. The tag (additional information) may include "Hot" for a file related with litigation, "Responsive", for one which may be related with litigation potentially, "Not Responsive" for one which is not related with litigation. More specifically, the operators may perform input of a tag by clicking a file row in Batch list.

The operators operate output unit 120 to output the document file related with litigation based on the additional information. For example, the operators may output only a document file attached with "Hot" or they may output document files attached with "Hot" and "Responsive".

Output unit 120 outputs the document file related with litigation based on the additional information (ST7).

Forensic system 1 may include a configuration by a plurality of servers. Forensic system 1 may include digital information extracting unit and searching unit. Digital information extracting unit and searching unit may be separated from the servers for a forensic system. Separated Forensic systems may be connected via a network.

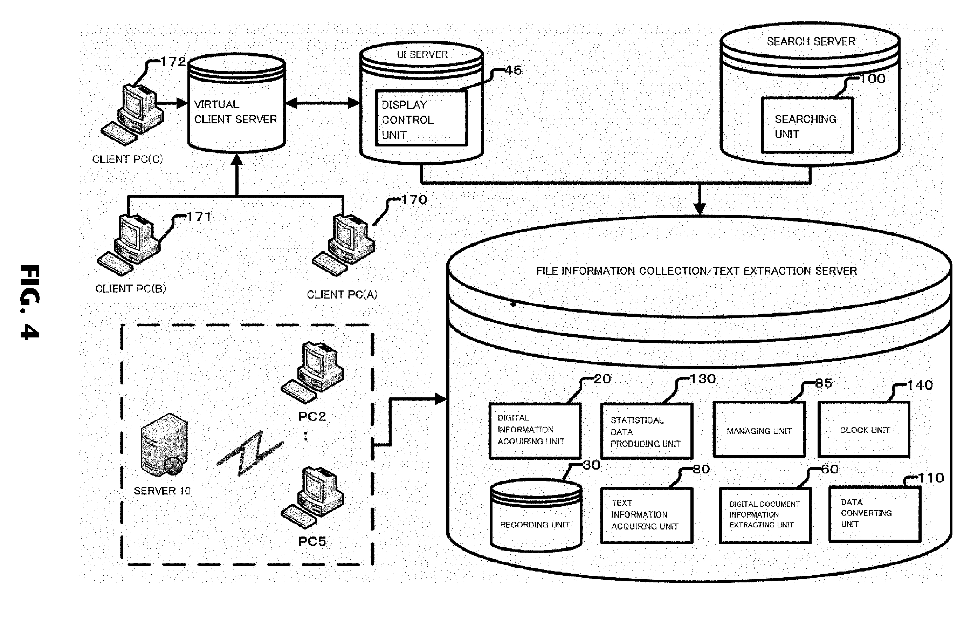

A second embodiment will be described with reference to FIG. 4.

Forensic system 1 may have a system configuration of a network type as shown in FIG. 4. The second embodiment of the present invention of Forensic systems 1 has processing units similar to those of forensic system 1 explained in the first embodiment of the present invention. Processing units are located separately in a plurality of servers. The servers are connected to each other via a network. Therefore, the servers may be located within the country, and the servers may be located in a distributing manner regardless of home and abroad.

Display units 40 are provided on clients PC170 to PC172. Display response of display units 40 can be improved by collecting data transmissions and receptions in a virtual client server in a bundle between a plurality of clients PC and a UI server.

Thus, forensic system 1 may be configured by the computer like the first embodiment or forensic system 1 may be configured by the system of the network type like the second embodiment.

According to forensic system 1, specific-individual selecting unit 50, additional information setting unit 70, and keyword setting unit 90 correspond to data input device provided in each of clients PC170 to PC172.

By selecting a specific individual, sorting only digital document information which was accessed by the specific individual based upon the access history information about the selected specific individual, extracting the sorted digital document information, setting additional information indicating whether or not document files in the extracted digital document information are each related with litigation, and outputting the document file related with litigation based upon the additional information, the forensic system 1 makes it possible to extract and analyze only the digital document information which was accessed by the specific individual without evaluating all the digital document information within the range of the access right possessed by the specific individual who is an individual involved in lawsuits.

Thereby, the operators can extract only the digital document information related with the specific individual among the flood of digital document information to achieve reduction of working load for evidential material preparation for litigation.

Forensic system 1 can use the second digital information recorded in the second server, and when extracting the second digital document information based upon the second access history information, forensic system 1 makes it possible to extract, analyze and evaluate only one of the digital document information recorded in the second server which was accessed by specific individual without evaluating all of much digital information recorded in the plurality of servers.

According to forensic system 1, text information extracting unit 80 and searching unit 100 are provided, and when additional information setting unit 70 sets additional information to the searched document file, the operators can narrow down only one of the digital document information recorded in the server which was accessed by the specific individual, and a population of the digital document information which is potentially related with litigation by a predetermining search.

According to forensic system 1, when the document file converted by data converting unit 110 is processed with the same data format as the converted data format in a period before it is outputted by output unit 120, the operators can reduce a wasteful step such as data format conversion in the course of the processing flow and they can exclude a risk of quality degradation of the digital document information.

According to forensic system 1, when statistical data producing unit 130 is further provided, statistical data can be visualized and provided to the operators, so that labor required for litigation preparation can be grasped early.

According to the forensic system, the forensic method, and the forensic program of the present invention, further, when the digital information acquiring unit acquires only the digital document information and folder information which were produced after the time and date previously clocked by the clock unit and acquires only the user information and the access history information related with the acquired digital document information and folder information, the operators can perform difference collection of the digital information, which can reduce load for acquiring the same digital information from the server or the like redundantly each time.

According to forensic system 1, when digital information extracting unit 60 and searching unit 100 are separated to servers for a forensic system, respectively, a processing capacity of the whole system can be improved by distributing calculation steps of respective processing units to the respective servers.

According to forensic system 1, when simultaneous utilization by a plurality of operators is possible, additional information setting unit 70 allows different operators to set additional information, so that the operators can perform a preparation work early by a plurality of individuals making determination about whether or not digital document information is each a evidential material to a law court.

The embodiments of the present invention have been described above, but the technical scope of the present invention is not limited to the scope described in the above-described embodiments. It is apparent that various modifications or improvements can be applied to the above-described embodiments. It is apparent from the description of the scope of claims that an aspect which has been applied with such a modification or improvement can also be included in the technical scope of the present invention.

Further, forensic systems 1 of the first embodiment and the second embodiment may be configured by combining the respective whole systems or respective processing units of the respective forensic systems 1.

## Claims

1. A forensic system which acquires digital information recorded on a plurality of computers or a server to analyze the acquired digital information, comprising:
a digital information acquiring unit which acquires digital information containing digital document information composed of a plurality of document files, user information about users utilizing the plurality of computers or the server, and access history information which shows the fact that the users accessed a document file recorded in the server;
a recording unit which records therein digital information acquired by the digital information acquiring unit;
a display unit which displays the recorded digital information;
a specific-individual selecting unit which selects a specific individual from at least one user contained in the user information via the display unit;
a digital document information extracting unit which extracts only digital document information which was accessed by the specific individual based upon the access history information related with the selected specific individual;
an additional information setting unit which sets, via the display unit, additional information indicating whether or not document files in the extracted digital document information are each related with litigation; and
an output unit which outputs a document file related with litigation based upon the additional information.

2. The forensic system according to claim 1, wherein the digital information acquiring unit is for acquiring second digital information including second digital document information, second user information and second access history information, the second digital information being recorded in a second server different from the server, and
the forensic system can use not only the digital information but also the second digital information, and extracts the second digital document information based upon the second access history information.

3. The forensic system according to claim 1 or 2, further comprising:
a text information extracting unit which extracts text information for each of the plurality of document files from the recorded digital document information;
a keyword selecting unit which selects a keyword; and
a searching unit which searches a document file including the selected keyword based upon the extracted text information, wherein
the additional information setting unit sets additional information to the searched document file.

4. The forensic system according to any one of claims 1 to 3, further comprising:
a data converting unit which converts a document file in the digital document information recorded by the recording unit to a predetermined data format, wherein
a document file converted by the data converting unit is processed with the same data format as the converted data format in a period before being outputted by the output unit.

5. The forensic system according to any one of claims 1 to 4, further comprising:
a statistical data producing unit which produces statistical data represented from data size for each data format of the acquired digital document information or statistical data represented from data size for each data format of the searched digital document information.

6. The forensic system according to any one of claims 1 to 5, further comprising:
a clock unit which, when newly acquiring digital information, clocks a time and date of the acquirement, the digital information further including folder information saving digital document information, wherein
the digital information acquiring unit acquires digital document information and folder information which were produced after a time and date clocked by the clock unit previously and acquires user information and access history information related with the acquired digital document information and folder information.

7. The forensic system according to any one of claims 1 to 6, wherein
the forensic system is composed of a plurality of servers for a forensic system,
the digital information extracting unit and the searching unit are separated to the servers for a forensic system, respectively, and
the separated forensic systems are connected to each other via a network.

8. The forensic system according to any one of claims 1 to 7, wherein
the forensic system can be utilized by a plurality of operators simultaneously, and
the additional information setting unit can set additional information by different operators.

9. The forensic system according to any one of claims 1 to 8, wherein
the output unit is either one of a printer and a digital document producing device.

10. A forensic method which acquires digital information recorded on a plurality of computers or a server to analyze the acquired digital information, comprising:
a step of acquiring digital information containing digital document information composed of a plurality of document files, user information about users utilizing the plurality of computers or the server, and access history information which shows the fact that the users accessed a document file recorded in the server;
a step of recording the acquired digital information;
a step of displaying the recorded digital information;
a step of selecting a specific individual from at least one user contained in the user information;
a step of extracting only digital document information which was accessed by the specific individual based upon the access history information related with the selected specific individual;
a step of setting additional information indicating whether or not document files in the extracted digital document information are each related with litigation; and
a step of outputting a document file related with litigation based upon the additional information.

11. A forensic computer program product which acquires digital information recorded on a plurality of computers or a server to analyze the acquired digital information, for causing a computer to execute:
a function of acquiring digital information containing digital document information composed of a plurality of document files, user information about users utilizing the plurality of computers or the server, and access history information which shows the fact that the users accessed a document file recorded in the server;
a function of recording the acquired digital information;
a function of displaying the recorded digital information;
s function of selecting a specific individual from at least one user contained in the user information;
a function of extracting only digital document information which was accessed by the specific individual based upon the access history information related with the selected specific individual;
a function of setting additional information indicating whether or not document files in the extracted digital document information are each related with litigation; and
a function of outputting a document file related with litigation based upon the additional information.
